# EUROPEAN PATENT SPECIFICATION

(11) **EP 3 789 254 B1**
(45) Date of publication and mention of the grant of the patent: **20.08.2025**
(21) Application number: 20193263.9
(22) Date of filing: 28.08.2020
(51) Int. Cl.: B60T 7/12, B60T 7/22, B60T 8/1755

(54) **METHOD, DEVICE AND SYSTEM FOR AUTOMATIC BRAKING OF VEHICLE**
VERFAHREN, VORRICHTUNG UND SYSTEM ZUM AUTOMATISCHEN BREMSEN EINES FAHRZEUGS
PROCÉDÉ, DISPOSITIF ET SYSTÈME DE FREINAGE AUTOMATIQUE D'UN VÉHICULE

(30) Priority: 02.09.2019 CN 201910822427
(43) Date of publication of application: 10.03.2021
(73) Proprietor: Robert Bosch GmbH, 70442 Stuttgart (DE)
(72) Inventor: ZHANG, Haiyang, Suzhou, Jiangsu 215021 (CN); POONELIL JOSE, Bijo, Suzhou, Jiangsu 215021 (CN); HUANG, Chongxi, Suzhou, Jiangsu 215021 (CN)

(56) References cited:
- EP-A2- 1 048 538
- EP-B1- 1 048 538
- DE-A1- 102011 109 842
- DE-A1- 102012 213 815
- DE-A1- 102019 201 162
- FR-A1- 3 046 392
- US-A- 4 760 529
- US-A1- 2007 182 243

## Description

### Technical Field

The invention relates to a method, device and system for automatic braking of a vehicle.

### Background Art

At present, various systems with an automatic vehicle braking function can be provided in a vehicle. For example, an adaptive cruise control (ACC) system, an automatic emergency braking (AEB) system, an advanced driver assistance system (ADAS) and a motor vehicle auto driving system all have an automatic vehicle braking function.

For vehicles mounted with conventional suspensions, it is inevitable that a vehicle body will stumble when braking or accelerating. Especially when the vehicles initiate braking until they stop, the vehicles may stumble several times until the energy is dissipated by the suspensions. This makes drivers and passengers feel uncomfortable and leads into potential safety hazards.

At present, the automatic vehicle braking function tends to only take the safety of vehicle driving into account, and cannot stop the vehicles at a very smooth reduced speed. Therefore, it is necessary to reduce the amplitude of a stumbled movement of vehicles during automatic vehicle braking to improve the vehicle riding experience.

DE 10 2011 109842 A1 provides a method for operating a driver assistance device of a motor vehicle, wherein the driver assistance device performs an environment monitoring of the motor vehicle and initiate a braking process with a given initial braking force in the event of a collision hazard with an obstacle.

DE 10 2012 213815 A1 provides a method for stopping a motor vehicle, which has an electronic environment control device for evaluating the data of one or more environment sensors and an electronic brake control device for controlling a brake system.

### Summary of the Invention

An objective of the invention is to allow an existing system for automatic braking of a vehicle to have an extended comfortable braking and stopping function, so as to reduce the amplitude of a stumbled movement of the vehicle during automatic braking, improving the vehicle riding experience.

According to the present invention, a method for automatic braking of a vehicle, as defined by independent claim 1, comprises: initiating automatic braking of the vehicle when a distance of the vehicle from an obstacle is less than a predetermined range, so that the vehicle is braked to drive at a reduced speed; determining, based on a decelerated driving condition of the vehicle, whether the vehicle needs to be comfortably braked and stop; and if it is determined that the vehicle needs to be comfortably braked and stop, initiating comfortable braking and stopping control for the vehicle, wherein the decelerated driving condition comprises the deceleration of the vehicle and the speed of the vehicle during driving at a reduced speed, if the deceleration of the vehicle is within a specified deceleration range and at the same time the speed of the vehicle is lower than a predetermined vehicle speed, it is determined that the vehicle needs to be comfortably braked and stop, and the deceleration of the vehicle is obtained by an accelerometer of the vehicle. The method further comprises: if it is determined that the vehicle needs to be comfortably braked and stop, detecting the distance of the vehicle from the obstacle ahead; and determining whether to initiate comfortable braking and stopping control for the vehicle based on the distance from the obstacle ahead and the current operating condition of the vehicle.

According to the present invention, a device for automatic braking of a vehicle, as defined by independent claim 5, comprises: a braking module configured to automatically brake the vehicle when a distance of the vehicle from an obstacle is less than a predetermined range, so that the vehicle drives
at a reduced speed; a first determination module for determining, based on a decelerated driving condition of the vehicle, whether the vehicle needs to be comfortably braked and stop; and a control module configured to control the braking module to initiate comfortable braking and stopping control for the vehicle if the first determination module determines that the vehicle needs the comfortable braking and stopping control, wherein the decelerated driving condition comprises the deceleration of the vehicle and the speed of the vehicle during driving at a reduced speed, determining whether the vehicle needs to be comfortably braked and stop comprises: if the deceleration of the vehicle is within a specified deceleration range and at the same time the speed of the vehicle is lower than a predetermined vehicle speed, determining that the vehicle needs to be comfortably braked and stop, and the deceleration of the vehicle is obtained by an accelerometer of the vehicle. The device further comprises: a distance detection module configured to detect a distance of the vehicle from the obstacle ahead if the first determination module determines that the vehicle needs to be comfortably braked and stop; and a second determination module configured to determine whether to initiate comfortable braking and stopping control for the vehicle based on the distance from the obstacle ahead and the current operating condition of the vehicle, wherein the control module is further configured to: control the braking module to initiate the comfortable braking and stopping control for the vehicle if the second determination module determines that the comfortable braking and stopping control for the vehicle can be initiated.
a controller according to an embodiment of the invention comprises: a processor; and a memory with executable instructions stored therein, the executable instructions, when executed, causing the processor to carry out the method according to the foregoing embodiment.

A machine-readable storage medium according to an embodiment of the invention has executable instructions stored therein, the executable instructions, when executed,
causing a machine to execute the method according to the foregoing embodiment.

A system for automatic braking of a vehicle according to an embodiment of the invention comprises: a sensor mounted on the vehicle and configured to detect the stroke of a brake pedal and/or an accelerator pedal of the vehicle; a pressure unit mounted on the vehicle and configured to generate a brake pressure to be supplied to a brake wheel cylinder of the vehicle; and an automatic braking control unit configured for automatic braking control of the vehicle, so that the vehicle drives at a reduced speed, wherein the automatic braking control unit comprises the foregoing controller which is connected to the sensor and the pressure unit.

According to the foregoing embodiments of the invention, a very stable reduced speed is kept during the automatic braking and stopping of the vehicle, so that the amplitude of a stumbled movement of the vehicle during automatic vehicle braking can be reduced, thereby improving the vehicle riding experience.

### Brief Description of the Drawings

The features, characteristics, advantages, and benefits of the invention will become apparent from the detailed description below in conjunction with the accompanying drawings.
Fig. 1 shows a schematic architecture diagram of a system for automatic braking and stopping of a vehicle according to an embodiment of the invention.
Fig. 2 shows an overall flowchart of a method for automatic braking and stopping of a vehicle according to an embodiment of the invention.
Fig. 3 shows a schematic diagram of a device for automatic braking and stopping of a vehicle according to an embodiment of the invention.
Fig. 4 shows a schematic diagram of a device for automatic braking and stopping of a vehicle according to an embodiment of the invention.
Fig. 5 shows a schematic diagram of a controller according to an embodiment of the invention.

### Detailed Description of Embodiments

Various embodiments of the invention are described in detail below in conjunction with the accompanying drawings.

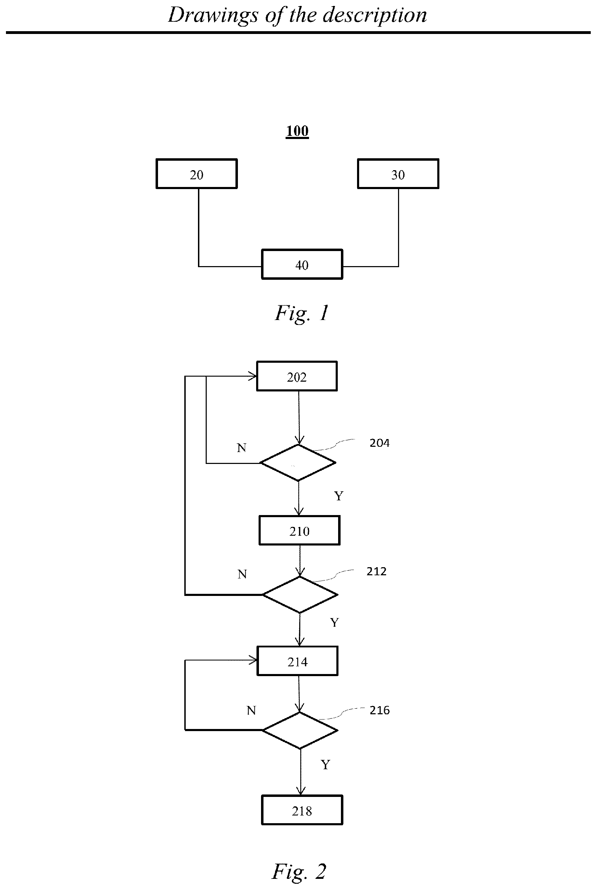

Fig. 1 shows a schematic architecture diagram of a system for automatic braking and stopping of a vehicle according to an embodiment of the invention. As shown in Fig. 1, a system 100 for automatic braking and stopping of a vehicle may comprise a sensor 20, a pressure unit 30 and an automatic braking control unit 40. The automatic braking control unit 40 is connected to the sensor 20 and the pressure unit 30, respectively in a wired or wireless manner. Herein, it is assumed that the system 100 is mounted on a vehicle. The automatic braking control unit 40 may be, for example, but not limited to, an anti-lock braking system controller, an electronic parking brake controller, an automatic emergency braking (AEB) system controller, or any other existing or newly-added suitable controller, etc. of a vehicle.

The sensor 20 is configured to sense the stroke of a brake pedal and/or an accelerator pedal (not shown) of the vehicle.

The pressure unit 30 is configured to generate a brake pressure to be supplied to a brake wheel cylinder ZDL of the vehicle, so that the brake wheel cylinder ZDL brakes wheels of the vehicle. For example, the pressure unit 30 may generate the brake pressure by forcing a brake fluid with a motor.

The automatic braking control unit 40 performs automatic braking control of the vehicle according to preset conditions. For example, the AEB system controller detects a distance from a vehicle ahead by using a vehicle-borne radar, makes an analysis via an electronic control unit (ECU) of the vehicle, and gives an alarm to a driver according to different distances and speeds. If the driver has no response after the alarm is given, the AEB system initiates automatic braking control when the safe distance is less than a predetermined range, i.e., the AEB system automatically intervenes in a brake system of the vehicle, thereby reducing a probability of collision with the vehicle/person ahead. When automatically braking the vehicle such that the vehicle drives at a reduced speed, the automatic braking control unit 40 may determine whether the vehicle needs to be comfortably braked and stop according to whether a deceleration of the vehicle is within a specified deceleration range R. When the result of determination is yes, the pressure unit 30 is instructed to generate a specified brake pressure S1, or a part of the brake fluid is extracted from the pressure unit 30, so that the pressure unit 30 generates a reduced specified brake pressure. The specified brake pressure is less than a brake pressure predetermined by the initiated automatic braking control of the vehicle to allow the vehicle to be brought into a stop state, so that the process from automatic braking until stopping is smoother, and the amplitude of the stumbled movement of the vehicle is reduced. If it is determined that the vehicle does not need to be comfortably braked and stop, the pressure unit 30 is still instructed to generate the predetermined brake pressure according to the initiated automatic braking process of the vehicle.

According to the embodiment of the invention, when the sensor 20 detects that the brake pedal or the accelerator pedal of the vehicle is stepped on, in which case, it is indicated that a driver is operating the vehicle, the automatic braking control unit 40 may then terminate its control function to allow the driver to take over the vehicle operation right.

According to the embodiment of the invention, the automatic braking control unit 40 of the vehicle may be implemented by, for example, but not limited to, at least one of the following systems: an electronic stability program (ESP) system, an iBooster for vehicle braking, an integrated power brake (IPB) system and a redundant brake unit (RBU), so as to allow these automatic braking systems to have a comfortable braking and stopping function.

The system according to the embodiment of the invention may support all automatic braking functions enabling braking of the vehicle until it stops, for example, including automatic braking functions in an ACC (adaptive cruise control) system, an AEB (automatic emergency braking) system, an ADAS (advanced driver assistance system) and a motor vehicle auto driving system, etc.

Fig. 2 shows an overall flowchart of a method for automatic braking and stopping of a vehicle according to an embodiment of the invention. A method 200 shown in Fig. 2 is described in detail below with reference to the system 100 shown in Fig. 1.

As shown in Fig. 2, in step 202, automatic braking control of the vehicle is initiated under predetermined conditions, so that the vehicle is automatically braked to drive at a reduced speed. In step 204, the automatic braking control unit 40 determines whether the vehicle needs to be comfortably braked and stop according to a decelerated driving condition of the vehicle, such as whether a deceleration of the vehicle is within a specified deceleration range R and whether the speed of the vehicle during driving at a reduced speed is lower than a predetermined vehicle speed (for example, 5 km/h). The specified deceleration range R may be, for example, but not limited to, greater than -5 m/s² and less than -1 m/s². The deceleration of the vehicle may be obtained, for example, but not limited to, from an accelerometer of the vehicle. Herein, if it is determined that the deceleration of the vehicle is within the specified deceleration range R and at the same time the vehicle speed of the vehicle during driving at a reduced speed is lower than the predetermined vehicle speed (Y), it is indicated that the vehicle needs to be comfortably braked and stop. If the deceleration of the vehicle is beyond the specified deceleration range R or at the same time the vehicle speed of the vehicle during driving at a reduced speed is higher than the predetermined vehicle speed (N), it is indicated that the vehicle does not need to be comfortably braked and stop, and the automatic braking control of the vehicle is continued.

If the result of determination in step 204 is no (N), i.e., the vehicle does not need to be comfortably braked and stop, the automatic braking control of the vehicle is continued, and the automatic braking control unit 40 instructs the pressure unit 30 to generate a predetermined corresponding brake pressure according to the initiated automatic braking control of the vehicle.

If the result of determination in step 204 is yes (Y), i.e., the vehicle needs to be comfortably braked and stop, the process may jump to step 214 to initiate comfortable braking and stopping control, and the automatic braking control unit 40 instructs the pressure unit 30 to generate a specified brake pressure S1, wherein the specified brake pressure S1 is less than the corresponding brake pressure predetermined by the initiated automatic braking control of the vehicle.

According to another embodiment of the invention, if it is determined in step 204 that the vehicle needs to be comfortably braked and stop, a vehicle-borne sensor (for example, a vehicle-borne radar or camera) may be used to detect a distance of the vehicle from an obstacle ahead (step 210), and whether to initiate the comfortable braking and stopping control is determined based on the distance from the obstacle ahead and the current working condition of the vehicle (for example, the current vehicle speed and a braking distance, etc.) (step 212). If it is determined in step 212 that the distance from the obstacle ahead and the current working state of the vehicle allow comfortable braking and stopping (Y), e.g., if the distance from the obstacle ahead is long enough and the operating state of the vehicle can meet the requirements of the comfortable braking and stopping control, the comfortable braking and stopping control is initiated (step 214). If it is determined in step 212 that the distance from the obstacle ahead and the current operating state of the vehicle do not allow the comfortable braking and stopping (N), the automatic braking control of the vehicle is continued to ensure that the vehicle does not collide with the obstacle ahead during the automatic braking and stopping; and during automatic braking of the vehicle, the vehicle-borne sensor may still continue to monitor the changing distance of the vehicle from the obstacle ahead for feedback control. Once it is detected that the distance from the obstacle ahead and the current operating state of the vehicle allow the comfortable braking and stopping, the comfortable braking and stopping control is initiated.

According to an embodiment of the invention, the initiated comfortable braking and stopping control comprises: instructing the pressure unit 30 configured to generate a brake pressure in the vehicle to generate a decreasing specified brake pressure, and finally keeping the generated specified brake pressure at a pressure necessary for stopping the vehicle, so that the vehicle speed of the vehicle gradually decreases and the vehicle finally enters a stop state very smoothly. If the vehicle cannot stop all the time, or an obstacle suddenly appears ahead, feedback control can be performed to instruct the pressure unit 30 to generate an increased brake pressure.

According to an embodiment of the invention, during the comfortable braking and stopping control, the specified brake pressure generated by the pressure unit 30 is generated by one of the following operations: a first operation in which the pressure unit 30 is instructed to generate a specified brake pressure to be supplied to a brake wheel cylinder of the vehicle; or a second operation in which a part of a brake fluid is extracted from the pressure unit 30, so that the pressure unit 30 generates a reduced specified brake pressure. The generated specified brake pressure may be less than a brake pressure predetermined by the automatic braking control of the vehicle, so as to make the braking process smoother. The first operation is to generate the brake pressure by instructing the pressure unit of the vehicle without noise and vibration and with a more stable brake pressure. These two operations may be suitable for different pressure units. For example, the IPB system and the iBooster are suitable for performing the first operation; and the electronic stability program (ESP) system and the redundant brake unit (RBU) are suitable for performing the second operation.

According to an embodiment of the invention, after the comfortable braking and stopping control is initiated, whether the vehicle has stopped may be determined according to the vehicle speed of the vehicle (step 216). If it is determined that the vehicle has stopped (Y), automatic parking control of the vehicle is initiated to keep the vehicle in a rest state automatically (step 218). For example, when the vehicle is waiting for a traffic light or stopping uphill or downhill, four-wheel braking is automatically initiated, and the vehicle after stopping is always in the rest state without using a handbrake or an electronic parking brake. If it is determined that the vehicle has not yet stopped (N), the comfortable braking and stopping control may be continued until the vehicle stops smoothly. The automatic parking control of the vehicle comprises, but is not limited to, an electronic parking brake (EPB) system, an automatic vehicle hold (AVH) system, a P-Lock, etc.

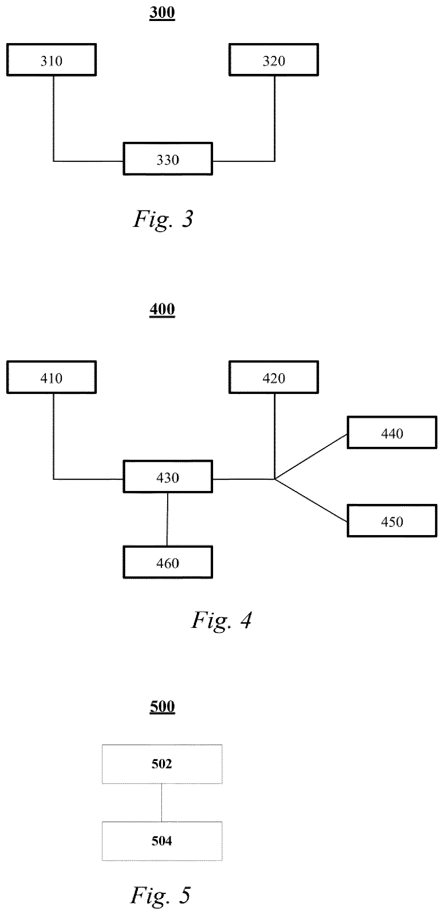

Fig. 3 shows a schematic diagram of a device 300 for automatic braking of a vehicle according to an embodiment of the invention. As shown in Fig. 3, the device 300 comprises: a braking module 310 configured to automatically brake the vehicle, so that the vehicle drives at a reduced speed; a first determination module 320 configured to determine, based on a decelerated driving condition (for example, a deceleration or a speed) of the vehicle, whether the vehicle needs to be comfortably braked and stop; and a control module 330, the control module 330 being configured to initiate comfortable braking and stopping control for the vehicle if the first determination module 320 determines that the vehicle needs the comfortable braking and stopping control. The first determination module 320 may be connected to various vehicle-borne sensors, such as an accelerometer, configured to detect the driving condition of the vehicle. If the deceleration of the vehicle is within the specified deceleration range (e.g., greater than -5 m/s² and less than -1 m/s²) and at the same time the speed of the vehicle is lower than a predetermined vehicle speed (e.g., 5 km/h), the first determination module 320 determines that the vehicle needs to be comfortably braked and stop, and the control module 320 immediately initiates the comfortable braking and stopping control for the vehicle.

Fig. 4 shows a schematic diagram of a device 400 for automatic braking of a vehicle according to another embodiment of the invention. In the device 400 of this embodiment, in addition to a braking module 410, a first determination module 420 and a control module 430 similar to those in the device 300 of Fig. 3, the device 400 may comprise: a distance detection module 460 (such as a vehicle-borne radar or a camera) configured to detect a distance of the vehicle from an obstacle ahead if the first determination module 420 determines that the vehicle needs to be comfortably braked and stop; and a second determination module 440 configured to determine, based on the detected distance from the obstacle ahead and the current operating condition of the vehicle, whether to initiate the comfortable braking and stopping control for the vehicle. If the second determination module 440 determines that the comfortable braking and stopping control of the vehicle may be initiated, the control module 430 controls the braking module 410 to initiate the comfortable braking and stopping control for the vehicle.

The device 400 may further comprise: a third determination module 450 configured to determine whether the vehicle has stopped according to the vehicle speed of the vehicle; if the third determination module 450 determines that the vehicle has stopped, the control module 430 initiates automatic parking control of the vehicle, so that the vehicle automatically keeps a rest state.

It should be understood that the first determination module 320 and the control module 330 in the device 300 shown in Fig. 3, and the first determination module 420, the control module 430, the second determination module 440 and the third determination module 450 in the device 400 shown in Fig. 4 may be implemented in software, hardware or a combination of software and hardware. These modules may also be arranged in the automatic braking control unit 40 as shown in Fig. 1 or any other suitable apparatuses on the vehicle.

Fig. 5 shows a schematic diagram of a controller according to an embodiment of the invention. As shown in Fig. 5, the controller 500 comprises a memory 502 and a processor 504. Executable instructions are stored in the memory 502, and when executed, cause the processor 504 to carry out the method for automatic braking and stopping of a vehicle according to the foregoing embodiments.

An embodiment of the invention can further provide a machine-readable storage medium with executable instructions stored therein which, when executed, cause a machine to carry out the method for automatic braking and stopping of a vehicle according to the foregoing embodiments.

The descriptions above of the present disclosure are provided to enable any person of ordinary skill in the art to implement or use the present disclosure. For a person of ordinary skill in the art, various modifications made to the present disclosure are obvious and the general principles defined herein may also be applied to other variants. Therefore, the present disclosure is not limited to the examples and designs described herein. Modifications are possible within the scope of the invention as defined by the appended claims.

## Claims

1. Method for automatic braking of a vehicle, comprising:
initiating (202) automatic braking control of the vehicle when a distance of the vehicle from an obstacle is less than a predetermined range, so that the vehicle is braked to drive at a reduced speed;
determining (204), based on a decelerated driving condition of the vehicle, whether the vehicle needs to be comfortably braked and stop; and
if it is determined that the vehicle needs to be comfortably braked and stop, initiating comfortable braking and stopping control for the vehicle,
wherein
the decelerated driving condition comprises the deceleration of the vehicle and the speed of the vehicle during driving at a reduced speed,
if the deceleration of the vehicle is within a specified deceleration range and at the same time the speed of the vehicle is lower than a predetermined vehicle speed, it is determined that the vehicle needs to be comfortably braked and stop, and
the deceleration of the vehicle is obtained by an accelerometer of the vehicle,
the method further comprising:
if it is determined that the vehicle needs to be comfortably braked and stop, detecting (210) the distance of the vehicle from the obstacle ahead; and
determining (212) whether to initiate comfortable braking and
stopping control for the vehicle based on the distance from the obstacle ahead and the current operating condition of the vehicle.

2. Method according to Claim 1, **characterized in that** the comfortable braking and stopping control comprises:
instructing a pressure unit (30) configured to generate a
brake pressure in the vehicle to generate a decreasing specified brake pressure, and finally keeping the specified brake pressure at a pressure necessary for stopping the vehicle.

3. Method according to Claim 2, **characterized in that** the specified brake pressure is generated by one of the following operations of:
a first operation in which the pressure unit (30) is instructed to generate the specified brake pressure to be supplied to a brake wheel cylinder of the vehicle; or
a second operation in which a part of a brake fluid is extracted from the pressure unit, so that the pressure unit generates a reduced specified brake pressure;
wherein the specified brake pressure is less than a brake pressure predetermined by the automatic braking control of the vehicle.

4. Method according to Claim 1, **characterized by** further comprising:
determining (216) whether the vehicle has stopped according to the vehicle speed of the vehicle; and
if it is determined that the vehicle has stopped, initiating (218) automatic parking control of the vehicle.

5. Device (300, 400) for automatic braking of a vehicle, comprising:
a braking module (310, 410) configured to automatically brake the vehicle when a distance of the vehicle from an obstacle is less than a predetermined range, so that the vehicle drives at a reduced speed;
a first determination module (320, 420) for determining, based on a decelerated driving condition of the vehicle, whether the vehicle needs to be comfortably braked and stop; and
a control module (330, 430) configured to control the braking module to initiate comfortable braking and stopping control for the vehicle if the first determination module determines that the vehicle needs the comfortable braking and stopping control,
wherein
the decelerated driving condition comprises the deceleration of the vehicle and the speed of the vehicle during driving at a reduced speed,
if the deceleration of the vehicle is within a specified deceleration range and at the same time the speed of the vehicle is lower than a predetermined vehicle speed, the first determination module determines that the vehicle needs to be comfortably braked and stop, and
the deceleration of the vehicle is obtained by an accelerometer of the vehicle,
the device further comprises:
a distance detection module (460) configured to detect a distance of the vehicle from the obstacle ahead if the first determination module determines that the vehicle needs to be comfortably braked and stop; and
a second determination module (440) configured to determine whether to initiate comfortable braking and stopping control for the vehicle based on the distance from the obstacle ahead and the current operating condition of the vehicle,
wherein the control module (330, 430) is further configured to:
control the braking module to initiate the comfortable braking and stopping control for the vehicle if the second determination module determines that the comfortable braking and stopping control for the vehicle can be initiated.

6. Device according to Claim 5, **characterized in that** the braking module (310, 410) instructs a pressure unit (30) configured tc generate a brake pressure in the vehicle to generate a decreasing specified brake pressure, and finally keeps the specified brake pressure at a pressure necessary for stopping the vehicle.

7. Device according to Claim 6, **characterized in that** the specified brake pressure is generated by the following operations:
the pressure unit generates, according to an instruction from the control module, the specified brake pressure to be supplied to a brake wheel cylinder of the vehicle; or a part of a brake fluid is extracted from the pressure unit according to an instruction from the control module, so that the pressure unit generates a reduced specified brake pressure,
wherein the specified brake pressure is less than a brake pressure predetermined by the automatic braking process of the vehicle.

8. Device according to Claim 5, **characterized by** further comprising:
a third determination module (450) configured to determine whether the vehicle has stopped according to the vehicle speed of the vehicle,
wherein the control module is further configured to: initiate automatic parking control of the vehicle if the third determination module determines that the vehicle has stopped.

9. Controller (500), comprising:
a processor (504); and
a memory (502) with executable instructions stored therein, the executable instructions, when executed, causing the processor (504) to carry out the method according to any one of Claims 1 to 4.

10. Machine-readable storage medium with executable instructions stored therein, the executable instructions, when executed, causing a machine to carry out the method according to any one of Claims 1 to 4.

11. System for automatic braking of a vehicle, comprising:
a sensor (20) mounted on the vehicle and configured to detect the stroke of a brake pedal and/or an accelerator pedal of the vehicle;
a pressure unit (30) mounted on the vehicle and configured to generate a brake pressure to be supplied to a brake wheel cylinder of the vehicle; and
an automatic braking control unit (40) configured for automatic braking control of the vehicle, so that the vehicle drives at a reduced speed, wherein the automatic braking control unit (40) comprises the controller according to Claim 9 which is connected to the sensor (20) and the pressure unit (30).

12. System according to Claim 11, **characterized in that** when the sensor detects that the brake pedal or the accelerator pedal is stepped on, the controller terminates a control function of an automatic braking control unit (40) of the vehicle.

13. System according to Claim 11 or 12, **characterized in that** the automatic braking control unit (40) of the vehicle is implemented by at least one of the following systems:
an electronic stability program, ESP, system, an iBooster, an integrated power brake, IPB, system and a redundant brake unit, RBU.

## Patentansprüche

1. Verfahren zum automatischen Bremsen eines Fahrzeugs, das Folgendes umfasst:
Initiieren (202) einer automatischen Bremssteuerung des Fahrzeugs, wenn ein Abstand des Fahrzeugs von einem Hindernis kleiner als ein vorbestimmter Bereich ist, so dass das Fahrzeug gebremst wird, um mit reduzierter Geschwindigkeit zu fahren;
Bestimmen (204), basierend auf einem verzögerten Fahrzustand des Fahrzeugs, ob das Fahrzeug auf komfortable Weise gebremst werden und anhalten muss; und
wenn bestimmt wird, dass das Fahrzeug auf komfortable Weise gebremst werden und anhalten muss, Initiieren einer komfortablen Brems- und Anhaltesteuerung für das Fahrzeug,
wobei
der verzögerte Fahrzustand die Verzögerung des Fahrzeugs und die Geschwindigkeit des Fahrzeugs während eines Fahrens mit einer reduzierten Geschwindigkeit umfasst,
wenn die Verzögerung des Fahrzeugs innerhalb eines vorgegebenen Verzögerungsbereichs liegt und
gleichzeitig die Geschwindigkeit des Fahrzeugs kleiner als eine vorbestimmte Fahrzeuggeschwindigkeit ist,
bestimmt wird, dass das Fahrzeug auf komfortable Weise gebremst werden und anhalten muss, und
die Verzögerung des Fahrzeugs durch einen Beschleunigungsmesser des Fahrzeugs erhalten wird,
das Verfahren ferner Folgendes umfasst:
wenn bestimmt wird, dass das Fahrzeug auf komfortable Weise gebremst werden und anhalten muss, Detektieren (210) des Abstands des Fahrzeugs von dem vorausliegenden Hindernis; und
Bestimmen (212), ob eine komfortable Brems- und Anhaltesteuerung für das Fahrzeug basierend auf dem Abstand von dem vorausliegenden Hindernis und dem aktuellen Betriebszustand des Fahrzeugs initiiert werden soll.

2. Verfahren nach Anspruch 1, **dadurch gekennzeichnet, dass** die komfortable Brems- und Anhaltesteuerung Folgendes umfasst:
Anweisen einer Druckeinheit (30), die dazu ausgelegt ist, einen Bremsdruck in dem Fahrzeug zu erzeugen,
einen abnehmenden vorgegebenen Bremsdruck zu erzeugen, und schließlich Halten des vorgegebenen Bremsdrucks auf einem Druck, der zum Anhalten des Fahrzeugs erforderlich ist.

3. Verfahren nach Anspruch 2, **dadurch gekennzeichnet, dass** der vorgegebene Bremsdruck durch einen der folgenden Vorgänge erzeugt wird:
einen ersten Vorgang, bei dem die Druckeinheit (30) angewiesen wird, den vorgegebenen Bremsdruck zu erzeugen, der einem Bremsradzylinder des Fahrzeugs zugeführt werden soll; oder
einen zweiten Vorgang, bei dem ein Teil eines Bremsfluids aus der Druckeinheit extrahiert wird, so dass die Druckeinheit einen reduzierten vorgegebenen Bremsdruck erzeugt;
wobei der vorgegebene Bremsdruck kleiner als ein durch die automatische Bremssteuerung des Fahrzeugs vorbestimmter Bremsdruck ist.

4. Verfahren nach Anspruch 1, **dadurch gekennzeichnet, dass** es ferner Folgendes umfasst:
Bestimmen (216), ob das Fahrzeug gemäß der Fahrzeuggeschwindigkeit des Fahrzeugs angehalten hat; und
wenn bestimmt wird, dass das Fahrzeug angehalten hat, Initiieren (218) einer automatischen Parksteuerung des Fahrzeugs.

5. Vorrichtung (300, 400) zum automatischen Bremsen eines Fahrzeugs, die Folgendes umfasst:
ein Bremsmodul (310, 410), das dazu ausgelegt ist, das Fahrzeug automatisch zu bremsen, wenn ein Abstand des Fahrzeugs von einem Hindernis kleiner als ein vorbestimmter Bereich ist, so dass das Fahrzeug mit einer reduzierten Geschwindigkeit fährt;
ein erstes Bestimmungsmodul (320, 420) zum Bestimmen, basierend auf einem verzögerten Fahrzustand des Fahrzeugs, ob das Fahrzeug auf komfortable Weise gebremst werden und anhalten muss; und
ein Steuermodul (330, 430), das dazu ausgelegt ist, das Bremsmodul zu steuern, um eine komfortable Brems- und Anhaltesteuerung für das Fahrzeug zu initiieren, wenn das erste Bestimmungsmodul bestimmt, dass das Fahrzeug die komfortable Brems- und Anhaltesteuerung benötigt,
wobei
der verzögerte Fahrzustand die Verzögerung des Fahrzeugs und die Geschwindigkeit des Fahrzeugs während eines Fahrens mit einer reduzierten Geschwindigkeit umfasst,
wenn die Verzögerung des Fahrzeugs innerhalb eines vorgegebenen Verzögerungsbereichs liegt und gleichzeitig die Geschwindigkeit des Fahrzeugs kleiner als eine vorbestimmte Fahrzeuggeschwindigkeit ist, das erste Bestimmungsmodul bestimmt, dass das Fahrzeug auf komfortable Weise gebremst werden und anhalten muss, und
die Verzögerung des Fahrzeugs durch einen Beschleunigungsmesser des Fahrzeugs erhalten wird,
die Vorrichtung ferner Folgendes umfasst:
ein Abstandsdetektionsmodul (460), das dazu ausgelegt ist, einen Abstand des Fahrzeugs von dem vorausliegenden Hindernis zu detektieren, wenn das erste Bestimmungsmodul bestimmt, dass das Fahrzeug auf komfortable Weise gebremst werden und anhalten muss; und
ein zweites Bestimmungsmodul (440), das dazu ausgelegt ist, basierend auf dem Abstand von dem vorausliegenden Hindernis und dem aktuellen Betriebszustand des Fahrzeugs zu bestimmen, ob eine komfortable Brems- und Anhaltesteuerung für das Fahrzeug initiiert werden soll,
wobei das Steuermodul (330, 430) ferner zu Folgendem ausgelegt ist:
Steuern des Bremsmoduls, um die komfortable Brems- und Anhaltesteuerung für das Fahrzeug zu initiieren, wenn das zweite Bestimmungsmodul bestimmt, dass die komfortable Brems- und Anhaltesteuerung für das Fahrzeug initiiert werden kann.

6. Vorrichtung nach Anspruch 5, **dadurch**
**gekennzeichnet, dass** das Bremsmodul (310, 410) eine Druckeinheit (30) anweist, die dazu ausgelegt ist, einen Bremsdruck in dem Fahrzeug zu erzeugen, einen abnehmenden vorgegebenen Bremsdruck zu erzeugen, und schließlich den vorgegebenen Bremsdruck auf einem Druck hält, der zum Anhalten des Fahrzeugs erforderlich ist.

7. Vorrichtung nach Anspruch 6, **dadurch gekennzeichnet, dass** der vorgegebene Bremsdruck durch die folgenden Vorgänge erzeugt wird:
die Druckeinheit erzeugt gemäß einer Anweisung von dem Steuermodul den vorgegebenen Bremsdruck, der einem Bremsradzylinder des Fahrzeugs zugeführt werden soll;
oder ein Teil eines Bremsfluids wird gemäß einer Anweisung von dem Steuermodul aus der Druckeinheit extrahiert, so dass die Druckeinheit einen reduzierten vorgegebenen Bremsdruck erzeugt,
wobei der vorgegebene Bremsdruck kleiner als ein durch den automatischen Bremsprozess des Fahrzeugs vorbestimmter Bremsdruck ist.

8. Vorrichtung nach Anspruch 5, **dadurch gekennzeichnet, dass** sie ferner Folgendes umfasst:
ein drittes Bestimmungsmodul (450), das dazu ausgelegt ist, gemäß der Fahrzeuggeschwindigkeit des Fahrzeugs zu bestimmen, ob das Fahrzeug angehalten hat,
wobei das Steuermodul ferner zu Folgendem ausgelegt ist: Initiieren einer automatischen Parksteuerung des Fahrzeugs, wenn das dritte Bestimmungsmodul bestimmt, dass das Fahrzeug angehalten hat.

9. Steuerung (500), die Folgendes umfasst:
einen Prozessor (504); und
einen Speicher (502) mit darin gespeicherten ausführbaren Anweisungen, wobei die ausführbaren Anweisungen bei Ausführung den Prozessor (504) veranlassen, das Verfahren nach einem der Ansprüche 1 bis 4 auszuführen.

10. Maschinenlesbares Speichermedium mit darin gespeicherten ausführbaren Anweisungen, wobei die ausführbaren Anweisungen bei Ausführung eine Maschine veranlassen, das Verfahren nach einem der Ansprüche 1 bis 4 auszuführen.

11. System zum automatischen Bremsen eines Fahrzeugs, umfassend:
einen Sensor (20), der an dem Fahrzeug montiert und dazu ausgelegt ist, den Hub eines Bremspedals und/oder eines Gaspedals des Fahrzeugs zu detektieren;
eine Druckeinheit (30), die an dem Fahrzeug montiert und dazu ausgelegt ist, einen Bremsdruck zu erzeugen, der einem Bremsradzylinder des Fahrzeugs zugeführt werden soll; und
eine automatische Bremssteuereinheit (40), die zur automatischen Bremssteuerung des Fahrzeugs ausgelegt ist, so dass das Fahrzeug mit einer reduzierten Geschwindigkeit fährt, wobei die automatische Bremssteuereinheit (40) die Steuerung nach Anspruch 9 umfasst, die mit dem Sensor (20) und der Druckeinheit (30) verbunden ist.

12. System nach Anspruch 11, **dadurch gekennzeichnet, dass**, wenn der Sensor detektiert, dass auf das Bremspedal oder das Gaspedal getreten wird, die Steuerung eine Steuerfunktion einer automatischen Bremssteuereinheit (40) des Fahrzeugs beendet.

13. System nach Anspruch 11 oder 12, **dadurch gekennzeichnet, dass** die automatische Bremssteuereinheit (40) des Fahrzeugs durch mindestens eines der folgenden Systeme implementiert ist:
ein elektronisches Stabilitätsprogramm-, ESP, System, einen iBooster, ein integriertes Bremskraftverstärker-, IPB, System und eine redundante Bremseinheit, RBU.

## Revendications

1. Procédé de freinage automatique d'un véhicule, comportant les étapes consistant à :
amorcer (202) une commande de freinage automatique du véhicule lorsqu'une distance du véhicule par rapport à un obstacle est inférieure à un intervalle prédéterminé, de telle sorte que le véhicule soit freiné pour circuler à une vitesse réduite ;
déterminer (204), d'après un état de circulation décélérée du véhicule, s'il est nécessaire que le véhicule soit freiné confortablement et s'arrête ; et
s'il est déterminé qu'il est nécessaire que le véhicule soit freiné confortablement et s'arrête, amorcer une commande de freinage confortable et d'arrêt pour le véhicule,
dans lequel
l'état de circulation décélérée comporte la décélération du véhicule et la vitesse du véhicule pendant la circulation à une vitesse réduite,
si la décélération du véhicule se situe à l'intérieur d'une plage de décélération spécifiée et qu'en même temps la vitesse du véhicule est inférieure à une vitesse prédéterminée de véhicule, il est déterminé qu'il est nécessaire que le véhicule soit freiné confortablement et s'arrête, et
la décélération du véhicule est obtenue par un accéléromètre du véhicule,
le procédé comportant en outre les étapes consistant :
s'il est déterminé qu'il est nécessaire que le véhicule soit freiné confortablement et s'arrête, à détecter (210) la distance du véhicule par rapport à l'obstacle devant ; et
à déterminer (212) s'il convient d'amorcer une commande de freinage confortable et d'arrêt pour le véhicule d'après la distance par rapport à l'obstacle devant et l'état de fonctionnement actuel du véhicule.

2. Procédé selon la revendication 1, **caractérisé en ce que** la commande de freinage confortable et d'arrêt comporte :
le fait de donner comme consigne à une unité (30) de pression configurée pour générer une pression de frein dans le véhicule de générer une pression de frein spécifiée décroissante, et finalement de maintenir la pression de frein spécifiée à une pression nécessaire pour arrêter le véhicule.

3. Procédé selon la revendication 2, **caractérisé en ce que** la pression de frein spécifiée est générée par une des opérations suivantes comprenant :
une première opération dans laquelle l'unité (30) de pression reçoit comme consigne de générer la pression de frein spécifiée à fournir à un cylindre de frein de roue du véhicule ; et
une deuxième opération dans laquelle une partie d'un fluide de frein est extraite de l'unité de pression, de telle sorte que l'unité de pression génère une pression de frein spécifiée réduite ;
la pression de frein spécifiée étant inférieure à une pression de frein prédéterminée par la commande de freinage automatique du véhicule.

4. Procédé selon la revendication 1, **caractérisé en ce qu'**il comporte en outre les étapes consistant à :
déterminer (216) si le véhicule s'est arrêté d'après la vitesse de véhicule du véhicule ; et
s'il est déterminé que le véhicule s'est arrêté,
amorcer (218) une commande de stationnement automatique du véhicule.

5. Dispositif (300, 400) de freinage automatique d'un véhicule, comportant :
un module (310, 410) de freinage configuré pour freiner automatiquement le véhicule lorsqu'une distance du véhicule par rapport à un obstacle est inférieure à un intervalle prédéterminé, de telle sorte que le véhicule circule à une vitesse réduite ;
un premier module (320, 420) de détermination servant à déterminer, d'après un état de circulation décélérée du véhicule, s'il est nécessaire que le véhicule soit freiné confortablement et s'arrête ; et
un module (330, 430) de commande configuré pour commander le module de freinage afin d'amorcer une commande de freinage confortable et d'arrêt pour le véhicule si le premier module de détermination détermine que le véhicule nécessite la commande de freinage confortable et d'arrêt,
dans lequel
l'état de circulation décélérée comporte la décélération du véhicule et la vitesse du véhicule pendant la circulation à une vitesse réduite,
si la décélération du véhicule se situe à l'intérieur d'une plage de décélération spécifiée et qu'en même temps la vitesse du véhicule est inférieure à une vitesse prédéterminée de véhicule, le premier module de détermination détermine qu'il est nécessaire que le véhicule soit freiné confortablement et s'arrête, et
la décélération du véhicule est obtenue par un accéléromètre du véhicule,
le dispositif comporte en outre :
un module (460) de détection de distance configuré pour détecter une distance du véhicule par rapport à l'obstacle devant si le premier module de détermination détermine qu'il est nécessaire que le véhicule soit freiné confortablement et s'arrête ; et
un deuxième module (440) de détermination configuré pour déterminer s'il convient d'amorcer une commande de freinage confortable et d'arrêt pour le véhicule d'après la distance par rapport à l'obstacle devant et l'état de fonctionnement actuel du véhicule, le module (330, 430) de commande étant en outre configuré pour :
commander le module de freinage pour amorcer la commande de freinage confortable et d'arrêt pour le véhicule si le deuxième module de détermination détermine que la commande de freinage confortable et d'arrêt pour le véhicule peut être amorcée.

6. Dispositif selon la revendication 5, **caractérisé en ce que** le module (310, 410) de freinage donne comme consigne à une unité (30) de pression configurée pour générer une pression de frein dans le véhicule de générer une pression de frein spécifiée décroissante, et maintient finalement la pression de frein spécifiée à une pression nécessaire pour arrêter le véhicule.

7. Dispositif selon la revendication 6, **caractérisé en ce que** la pression de frein spécifiée est générée par les opérations suivantes :
l'unité de pression génère, d'après une instruction provenant du module de commande, la pression de frein spécifiée à fournir à un cylindre de frein de roue du véhicule ; ou une partie d'un fluide de frein est extraite de l'unité de pression d'après une instruction provenant du module de commande, de telle sorte que l'unité de pression génère une pression de frein spécifiée réduite,
la pression de frein spécifiée étant inférieure à une pression de frein prédéterminée par le processus de freinage automatique du véhicule.

8. Dispositif selon la revendication 5, **caractérisé en ce qu'**il comporte en outre :
un troisième module (450) de détermination configuré pour déterminer si le véhicule s'est arrêté d'après la vitesse de véhicule du véhicule,
le module de commande étant en outre configuré pour: amorcer une commande de stationnement automatique du véhicule si le troisième module de détermination détermine que le véhicule s'est arrêté.

9. Moyen (500) de commande, comportant :
un processeur (504) ; et
une mémoire (502) dans laquelle sont stockées des instructions exécutables, les instructions exécutables, lorsqu'elles sont exécutées, amenant le processeur (504) à réaliser le procédé selon l'une quelconque des revendications 1 à 4.

10. Support de stockage lisible par machine dans lequel sont stockées des instructions exécutables, les instructions exécutables, lorsqu'elles sont exécutées, amenant une machine à réaliser le procédé selon l'une quelconque des revendications 1 à 4.

11. Système de freinage automatique d'un véhicule, comportant :
un capteur (20) monté sur le véhicule et configuré pour détecter la course d'une pédale de frein et/ou d'une pédale d'accélérateur du véhicule ;
une unité (30) de pression montée sur le véhicule et configurée pour générer une pression de frein à fournir à un cylindre de frein de roue du véhicule ; et
une unité (40) de commande de freinage automatique configurée pour la commande de freinage automatique du véhicule, de telle sorte que le véhicule circule à une vitesse réduite, l'unité (40) de commande de freinage automatique comportant le moyen de commande selon la revendication 9 qui est relié au capteur (20) et à l'unité (30) de pression.

12. Système selon la revendication 11, **caractérisé en ce que**, lorsque le capteur détecte que la pédale de frein ou la pédale d'accélérateur est enfoncée, le moyen de commande met fin à une fonction de commande d'une unité (40) de commande de freinage automatique du véhicule.

13. Système selon la revendication 11 ou 12,
**caractérisé en ce que** l'unité (40) de commande de freinage automatique du véhicule est mise en œuvre par au moins un des systèmes suivants :
un système d'électro-stabilisateur programmé, ESP, un iBooster, un système de freinage assisté intégré, IPB, et une unité de frein redondante, RBU.
